# EUROPEAN PATENT APPLICATION

(11) **EP 1 770 486 A1**
(43) Date of publication of application: **04.04.2007**
(21) Application number: 06020273.6
(22) Date of filing: 27.09.2006
(51) Int. Cl.: G06F 3/033

(54) **Input device with fingerprint authentication**

(30) Priority: 28.09.2005 JP 2005281216
(71) Applicant: Aruze Corporation, Tokyo 135-0063 (JP)
(72) Inventor: Tachibana, Tatsunori, Tokyo 135-0063 (JP)
(74) Representative: HOFFMANN EITLE

(57) **Abstract**

An input device comprises a touch panel (1), a memory (22) and a CPU (21). The touch panel (1) reads one ormore fingerprints. The memory (22) stores a plurality of fingerprints which are previously read by touch panel (1). The stored fingerprints are related to one or more processes. The CPU (21) compares the one or more fingerprints read by the touch panel (1) with any of the fingerprints stored in the memory (22). The CPU (21) generates the one or more input signal when determining that the one or more fingerprints read by the touch panel (1) are identical to any of the fingerprints stored in the memory (22). The one or more input signal causes a gaming machine (10) to execute the one or more processes associated with the one or more fingerprints which are read by the touch panel (1), in a case where the read one or more fingerprints are identical to any of fingerprints previously stored in the memory (22).

## Description

### BACKGROUND OF THE INVENTION

### 1. Field of the Invention

The present invention relates to an input device for a gaming machine.

### 2. Description of the Related Art

There has been conventionally an input device for a gaming machine including a touch panel instead of a conventional contoroller. A player can draw a picture or write a word on the touch panel with his/her finger to input the information into the game machine because the touch panel is employed as an input means. This operation is not carried out on the contoroller. However, the player can not carry out various operations by using the touch panel because an input operation on the touch panel is basically an on-off operation. In a case where two players play one game together by using the touch panel, since the on-off operation does not have a function for identifying each player operating the touch panel, the two players must play the one game alternately. Thus, the one game is limited to an alternating play game such as a chess game.

A new touch panel is developed to cause a plurality of player's fingerprints to be previsously stored in a main memory corresponding one-to-one with a plurality of processes, which allows the various operations by using the new touch panel as well as a mounse. The new touch panel is disclosed in Japanese Patent Laid-open Publication No. H11-327727. If this touch panel is applied to an input device for a gaming machine, a player can easily carry out various operations by holding his /her finger over the touch panel. For example, the player can enter into the gaming machine three different orders corresponding to his/her forefinger, middle finger, and medicinal finger, once fingerpirints of these fingers are previously stored in the gaming machine.

In a case where two players play one game together by using this touch panle, we will expect that the two players can play the one game simultaneously because the gaming machine may identify each player with reference to the held fingerprint once a fingerprint of each player's forefinger is previously stored in the gaming machine.

However, the player can not simultaneously enter into the gaming machine two different orders corresponding to two different finger because the above-described touch panel is configured to allow one player to select one operation among the various operations and enter one order corresponding to the selected operation at a time by using his /her one fingerprint. Further, in a game to be played by multiple players, the multiple players can not simultaneously enter into the gaming machine multiple orders correspoining to multiple fingers of the multiple players because the above-described touch panel is configured to allow one player to enter one order at a time by using his/her one fingerprint. Therefore, there is a problem that games with which the gaming machine with the above-described touch panel is capable of providing one or more players are limited.

### SUMMARY OF THE INVENTION

It is an object of the present invention to provide an input device configured to allow one or more players to enter multiple orders at about the same time.

In order to achieve the object, the present invention provides An input device employed in a gaming operation and configured to generate one or more input signals for causing a gaming machine to execute one or more processes associated with one or more fingerprints which are read by the input device in a case where the read one or more fingerprints are identical to any of fingerprints previously stored in the input device, comprising: a fingerprint reading means for reading the one or more fingerprints; a memory means for storing therein a plurality of fingerprints which are previously read by the fingerprint reading means, wherein the stored fingerprints are related to the one or more processes; a comparing means for comparing the one or more fingerprints read by the fingerprint reading means with any of the fingerprints stored in the memory means; and a signal generating means for generating the one or more input signal when the comparing means determines that the one or more fingerprints read by the fingerprint reading means are identical to any of the fingerprints stored in the memory means.

According to the present invention, since the signal generating means generates the one or more input signal in the case where the compring means determines that the one or more fingerprints read by the fingerprint reading means are identical to any of fingerprints stored in the memory means, the one or more processes can be entered in the gaming machine at about the same time, at a time when one or more players play a game.

### BRIEF DESCRIPTION OF THE DRAWINGS

FIG. 1 is a perspective view of a gaming machine according to an exemplary embodiment of the present invention.
FIG.2 is a plain view of a registration screen for a fingerprint according to the exemplary embodiment of the present invention.
FIG.3 is a block diagram of a gaming machine according to the exemplary embodiment of the present invention.
FIG.4 is an explanation view of an operation table according to the exemplary embodiment of the present invention.
FIG. 5 is a flow chart which shows a main routine according to the exemplary embodiment of the present invention.
FIG.6 is a flow chart which shows a fingerprint registration process routine according to the exemplary embodiment of the present invention.
FIG. 7 is a flow chart which shows an input process routine according to the exemplary embodiment of the present invention.

### DESCRIPTION OF THE PREFERRED EMBODIMENTS

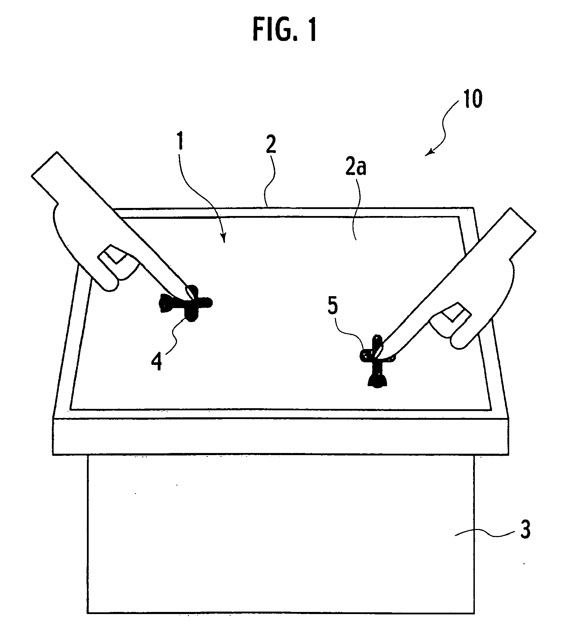

Hereinafter, an exemplary embodiment of the present invention will be described with reference to FIGS.1 to 7.

### (Mechanical configuration of a gaming machine)

As shown in FIG.1, a gaming machine 10 comprises a touch panel 1, a display device 2 and a base portion 3.

The display device 2 is composed of a liquid crystal panel and has a display screen 2a. It is noted that the display device 2 may be composed of a cathode-ray tube (CRT) display, a plasma display or the like, instead of the liquid crystal panel. The display device 2 is flatly disposed on the base portion 3 such that the display screen 2a is located on an upper surface thereof. When a game is started, the display device 2 displays a pair of icons 4, 5 on the display screen 2a (see FIG.1). One player A and the other player B operate the icons 4, 5, respectively. The icons 4, 5 have aircraft shapes. The game is one game to be simultaneously played by two players. In the present exemplary embodiment, a content of the one game is the following matter: aircrafts (icons 4, 5) drop bombs toward an enemy base on the ground to destroy the enemy base while warding off anti-aircraft fires which are fired toward the aircrafts from the enemy base. In the one game, the player A looks down a virtual ground from the above on the display screen 2a and carries out amoving operation (operation A) and a bomb dropping operation (operation B) of the icon 4. The player B also looks down the virtual ground from the above on the display screen 2a and carries out amoving operation (operation A) and a bomb dropping operation (operation B) of the icon 5.

The touch panel 1 is mounted on the whole area of the display screen 2a. The touch panel 1 has a lower glass and an upper film formed by disposing respective indum tin oxides (ITOs), which are transparent conductors, in a straight elongated shape. In the touch panel 1, the upper film is disposed to be opposed to the lower glass at a predetermined distance such that these transparent conductors cross one another at a predetermined distance. When a player presses the upper film of the touch panel 1 with his/her finger or a pen, the touch panel 1 outputs a vertical position and a lateral position of an area thereon where the transparent conductors contact each other to turn on electricity. Thereby, the gaming machine 10 identifies the pressed area on the touch panel 1.

Also, the touch panel 1 can scan in a fingerprint of the player who is pressing the touch panel 1 at a high resolution. For example, the touch panel 1 has an image scan density of 10 scan lines/mm. Therefore, the touch panel 1 can detect differences between a resistance value generated at a bottom of a fingerprint and one generated at a top of the fingerprint and between a capacitance value generated at the bottom of the fingerprint and one generated at the top of the fingerprint when the transparent conductors contact each other to turn on electricity. When the players A, B press areas where the icons 4 , 5 are displayed with their fingers , fingerprints of the players A, B are scaned in by the touch panel 1 and identified by the gaming machine 10 (see FIG.1). As will hereinafter be described in detail, an input of operation process for the icons 4, 5 is valid, only when the fingerprints of fingers touching the icon 4, 5 are identical to fingerprints previously registered in the gaming machine 10.

Operations that the players A, B can enter into the gaming machine 10 are the moving operation (operation A) and the bomb dropping operation (operation B). The operation A is carried out by freely moving one finger of the player A (or B) on the touch panel 1 as the player A (or B) touches the icon 4 (or 5) with his/her finger. The operation B is carried out by arbitrarily touching the icon 4 (or 5) with another finger of the player A (or B). The one finger with which the operation A is carried out and the another finger with which the operation B is carried out are previously registered in the gaming machine 10.

Since the touch panel 1 is mounted on the whole area of the display screen 2a, the players A, B can freely locate the icons 4, 5 at their desired positions by the operations A and drop bombs from their desired positions by the operations B. That is, the players A, B can enter various operations into the gaming machine 10 from anywhere in the display screen 2a. Further, the players A, B can play the game with a sense of amusement which is different from one by using a controller, by carrying out the operations A by which they freely move the icons 4, 5 with their fingers. It is noted that the gaming machine 10 does not response to order entries of the players A, B as invalid entries if they touch with their fingers areas other than the areas where the icons 4, 5 are displayed.

The base portion 3 supports the display device 2 and accommodates a circuit configured to drive the gaming machine 10 therein.

### (Fingerprint registration screen)

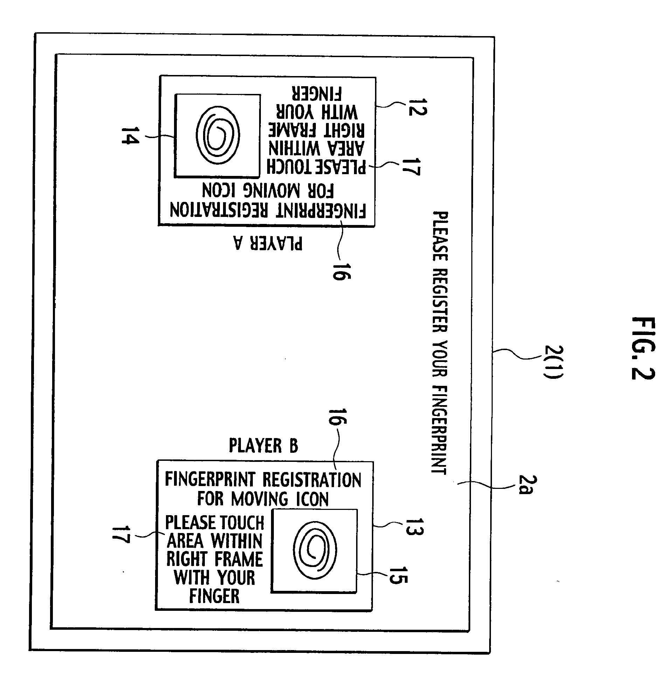

In the gaming machine 10, before the game is played, a registration of fingerprints with which each player enters the operations A, B is carried out every player. As shown in FIG. 2, a fingerprint registration screen is displayed on the display device 2. The fingerprint registration screen is divided into a divided screen 12 for receiving fingerprints of the player A and a divided screen 13 for receiving fingerprints of the player B.

On the divided screen 12 or 13, a character image 16 which means "FINGERPRINT REGISTRATION FOR MOVING ICON" and a character image 17 which means "PLEASE TOUCH AREA WITHIN RIGHT FRAME WITH YOUR FINGER". The fingerprint registration screen is therefore a screen for registering each player' s fingerprint to be employed when the player enters the moving operation (operation A). Further, on the dividend screen 12 or 13, a registration area 14 or 15 where the player A or B touches with his/her finger is displayed. If the player A touches the registration area 14, the touch panel 11 reads his/her fingerprint to be employed when he/she enters the operation A, and stores the read fingerprint into a memory 22. Also, if the player B touches the registration area 15, the touch panel 11 reads his/her fingerprint to be employed when he/she enters the operation A, and stores the read fingerprint into the memory 22. A registration of each player's fingerprint to be employed when the player enters the bomb dropping operation (operation B) takes place in as well as the registration for the operation A.

### (Electrical configuration of a gaming machine)

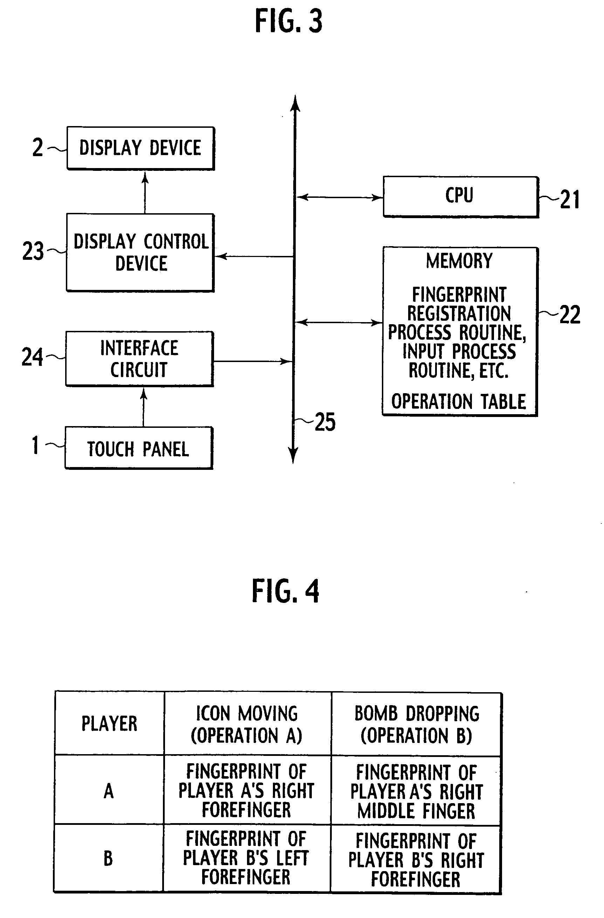

Next, an electrical configuration of the gaming machine 10 will be described with reference to FIG.3.

The gaming machine 10 comprises the touch panel 1, the display device 2, a CPU 21, the memory 22, a display control device 23, an interface circuit 24 and an input-output bus 25. It is noted that an input device of the present invention comprises the touch panel 1, the CPU 21, the memory 22, the interface circuit 24 and the input-output bus 25.

The CPU 21 is connected to the input-output bus 25 to receive various data signals from the memory 22 and the interface circuit 24 or send them to the memory 22 and the display control device 23.

The interface circuit 24 is connected to the touch panel 1 and the input-output bus 25. Information on each fingerprintprint read by the touch panel 1 is sent to the CPU 21 via the interface circuit 24 and the input-output bus 25 to be processed in the CPU 21.

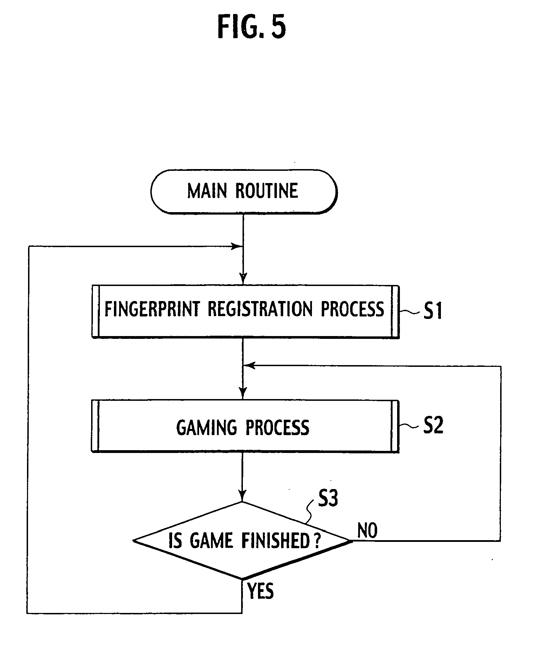

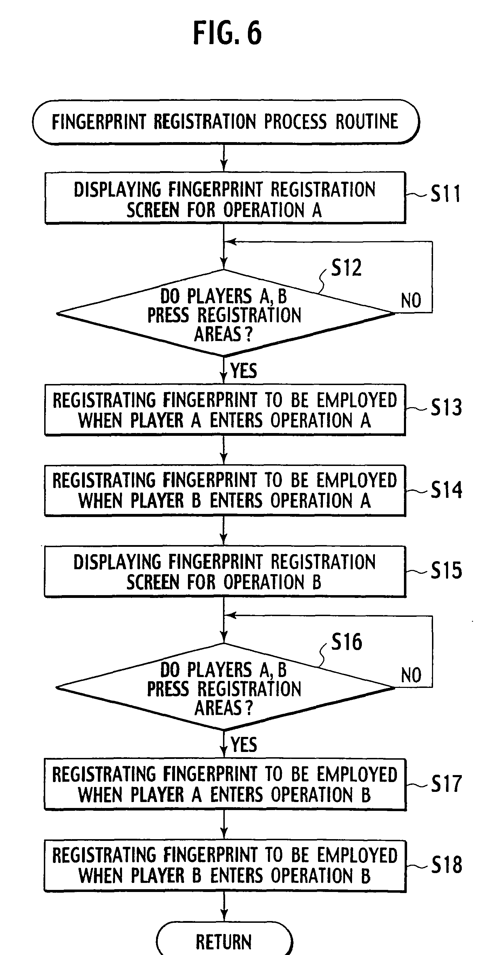

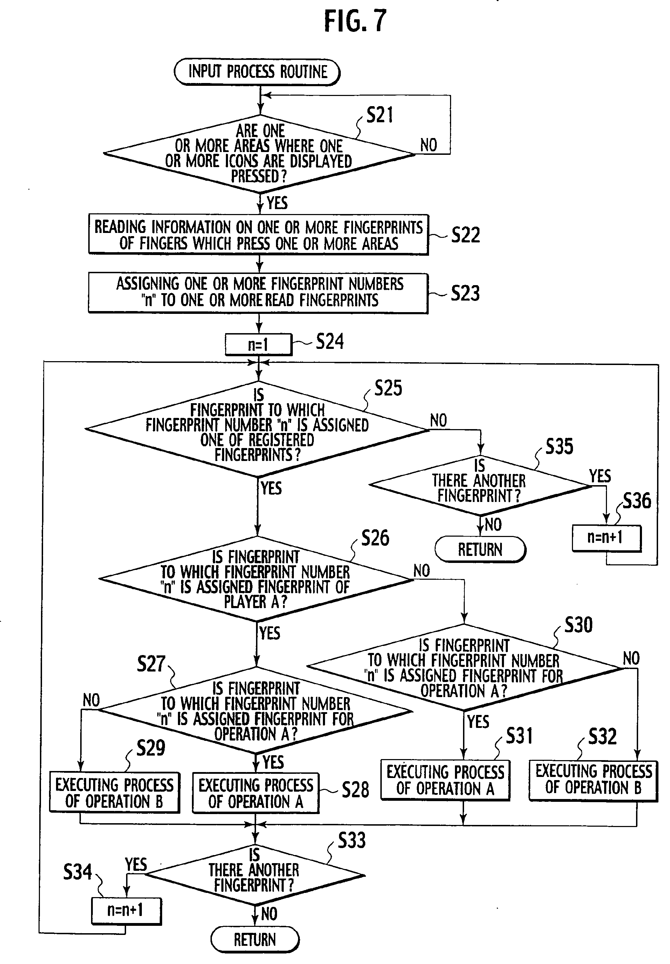

The memory 22 is connected to the input-output bus 25. Control programs such as a main routine (see FIG.5) for controlling the gamingmachine 10 and a fingerprint regist ration process routine (see FIG.6) and an input process routine (see FIG.7) to be executed during execution of the main routine are stored in the memory 22. Also, multiple pieces of information such as information on the fingerprints to be employed when the player A enters the operations A, B and information on the fingerprints to be employed when the player B enters the operations A, B are temporarily stored in the memory 22. These pieces of information on the fingerprints are managed in an operation table, as will hereinafter be described in detail.

The display control device 23 is connected to the input-output circuit 25. The display control device 23 generates a driving signal for driving the display device 2 and then outputs the generated driving signal to the display device 2, according to a fingerprint with which each player enters the operation and the multiple pieces of information on the fingerprints managed in the operation table. Thereby, on the display screen 2a, the icons 4, 5 are moved depending on the operation A and the bombs are dropped from the icons 4, 5 depending on the operation B.

### (Operation table)

Next, the operation table stored in the memory 22 will be described with reference to FIG.4.

The operation table has a player column, an icon moving (operation A) column and a bomb dropping (operation B) column therein. In the icon moving column, two pieces of information on the fingerprints which are previously registered by the players A, B on the fingerprint registration screen before the game is started is stored. For example, as shown in FIG.4, a fingerprint of the player A's right forefinger is stored in the icon moving column as the fingerprint of the player A side, and a fingerprint of the player B's left forefinger is stored in the icon moving column as the fingerprint of the player B side.

In the bomb dropping column, two pieces of information on the fingerprints which are previously registered by the players A, B on the fingerprint registration screen before the game is started is stored. For example, as shown in FIG.4, a fingerprint of the player A's right middle finger is stored in the bomb dropping column as the fingerprint of the player A side, and a fingerprint of the player B's right forefinger is stored in the bomb dropping column as the fingerprint of the player B side.

If the fingerprint of the player A side is that of the player A , the fingerprint of the player B side is that of the player B and the fingerprints for operations A, B are different from each other, the fingerprints to be employed at the time of entering the operations A, B may be fingerprints of any fingers. For example, as shown in FIG.4, the player A determines that the operations A, B are entered with his/her right hand, and the player B determines that the operation A is entered with his/her left hand and the operation B is entered with his /her right hand.

### (Operation of the gaming machine: main routine)

Next, operations of the gaming machine 10 and the input device will be described, with reference to FIGS.5 to 7.

As shown in FIG.5, the CPU 21 executes the main routine to start the game. In step S1, the CPU 21 executes a fingerprint registration process. In step S2, the CPU 21 executes a gaming process to start the game. In step S3, the CPU 21 determines whether or not the game is finished. If the game is finished (YES), the CPU 21 executes the fingerprint registration process. If the game is not finished (NO), the CPU 21 remains the gaming process.

The fingerprint registration process routine of step S1 will be described in detail. As shown in FIG.6, the CPU 21 executes the fingerprint registration process routine. In step S11, the CPU 21 displays the fingerprint registration screen for registering a fingerprint for each player to be employed at the time of entering the operation A, on the display screen 2a of the display device 2 (see FIG.2). In step S12, the CPU 21 determines whether or not the players A, B press the registration areas 14, 15, respectively. If the players A, B press the registration areas 14, 15, the CPU 21 executes a process of step S13. If the players A, B do not press the registration areas 14, 15, the CPU 21 re-executes the process of step S12 to wait finish of fingerprint registrations by the players A, B. InstepS13, theCPU21registratesthefingerprint to be employed when the player A enters the operation A into the operation table. In step S14, the CPU 21 registrates the fingerprint to be employed when the player B etners the operation A into the operation table.

In step S15, the CPU 21 displays the fingerprint registration screen for registering a fingerprint for each player to be employed at the time of entering the operation B, on the display screen 2a of the display device 2 (see FIG.2). In step S16, the CPU 21 determines whether or not the players A, B press the registration areas 14, 15, respectively. If the players A, B press the registration areas 14, 15, the CPU 21 executes a process of step S17. If the players A, B do not press the registration areas 14, 15, the CPU 21 re-executes the process of step S16 to wait finish of fingerprint registrations by the players A, B. In step S17, the CPU 21 registrates the fingerprint to be employed when the player A enters the operation B into the operation table. In step S18, the CPU 21 registrates the fingerprint to be employed when the player B etners the operation B into the operation table. Then, the CPU 21 executes the process of step S2.

The input process routine in the gaming process of step S2 will be described in detail. As shown in FIG.7, in step S21, the CPU 21 determines whether an area of the touch panel 1 where the icon 4 is displayed and/or one where the icon 5 is displayed are/is pressed. If one or more areas are pressed, the CPU 21 executes a process of step S22. If one or more areas are not pressed, the CPU 21 re-executes the process of step S21 to wait pressing the one or more areas. In step S22, the CPU 21 reads information on one or more fingerprints of fingers which press the one or more areas. In step S23, the CPU 21 assignes one or more fingerprint numbers (n: n≧1) to the one or more read fingerprints, respectively. In step S24, the CPU 21 set the fingerprint number "n" at "1".

In step S25, the CPU 21 determines whether or not a fingerprint to which the fingerprint number "n" is assigned is one of the registered fingerprints. If the fingerprint is the registered fingerprint, the CPU 21 executes a process of step S26. In step S26, the CPU 21 determines whether or not the fingerprint to which the fingerprint number "n" is assigned is a fingerprint of the player A. If the fingerprint is the fingerprint of the player A, the CPU 21 executes a process of step S27. In step S27, the CPU 21 determines whether or not the fingerprint to which the fingerprint number "n" is assigned is a fingerprint for the operation A. If the fingerprint is the fingerpring for the operation A, the CPU 21 executes the process of the operation A (step S28). If the fingerprint is not the fingerprint for the operation A, the CPU 21 recognizes that the fingerprint is a fingerprint for the operation B and then executes the process of the operation B (step S29).

In step S26, if the fingerprint is not the fingerprint of the player A, the CPU 21 recognizes that the fingerprint is a fingerprint of the player B and then executes a process of step S30. In step S30, the CPU 21 determines whether or not the fingerprint to which the fingerprint number "n" is assigned is a fingerprint for the operation A. If the fingerprint is the fingerpring for the operation A, the CPU 21 executes the process of the operation A (step S31). If the fingerprint is not the fingerprint for the operation A, the CPU 21 recognizes that the fingerprint is a fingerprint for the operation B and then executes the process of the operation B (step S32).

Thus, in the case where the fingerprint of the finger pressing the icon 4 or 5 is identical to the fingerprint previously stored in the operation table, the operation A or B corresponding to the fingerprint of the pressing finger is valid. More specifically, the player A can enter the operation A via the icon 4 by using the fingerprint of his/her right forefinger, and the operation B via the icon 4 by using the fingerprint of his/her right middile finger. Also, the player B can enter the operation A via the icon 5 by using the fingerprint of his/her left forefinger, and the operation B via the icon 5 by using the fingerprint of his/her right forefinger. The gaming machine 10 can prevent a third party from entering the operations A, B because it allows the player A, B to enter the operations A, B by only using the registered fingerprints.

Various operation inputs by two players are activated by pressing the icons 4, 5 displayed on the display screen 2a, and accordingly the two players can enter various operations from anywhere on the touch panel 1. Further, the player enters the operation A to freely move the icon 4 or 5 with his/her finger, and accordingly the player can play the game while having a new sense different from one of moving the icon 4 or 5 by using a conventional controller.

After the processes of steps S28, S29, S31, S32, the main CPU 21 determines whether or not there is another fingerprint (in step S33). If there is another fingerprint, the main CPU 21 adds "1" to the fingerprint number "n" (in step S34) and then executes the process of step S25. If there is not another fingerprint, the main CPU 21 executes the process of step S2.

In step S25, if the fingerprint is not the registered fingerprint, the main CPU 21 executes a process of step S35. In step S35, the main CPU 21 determines whether or not there is another fingrerpring. If there is another fingerprint, the main CPU 21 adds "1" to the fingerpring number "n" (in step S36) and then executes the process of step S25. If there is not another fingerprint, the main CPU 21 executes the process of step S2. Thus, the main CPU 21 can determine whether or not the fingerprints of the fingers simultaneously pressing the icon 4, 5 is previously registered, and accordingly the gaming machine 10 allows two players to enter multiple orders at about the same time.

### (Summary of the exemplary emobdiment)

As described above, the input device of the present exemplary embodiment is employed in a gaming operation and generates one or more input signals for causing a gaming machine 10 to execute one or more processes associated with one or more fingerprints which are read by the input device, in a case where the read one or more fingerprints are identical to any of fingerprints previously stored in the input device. The input device comprises a touch panel 1, a memory 22, a comparing unit (the CPU 21, the input process routine in FIG. 7, and the like) and a signal generating unit (the CPU 21, the input process routine in FIG.7, and the like). The touch panel 1 read one or more fingerprints . The memory 22 stores therein a plurality of fingerprints which are previously read by touch panel 1. The stored fingerprints are related to the one ormore processes. The comparing unit compares the one or more fingerprints read by the touch panel 1 with any of the fingerprints stored in the memory 22. The signal generating unit generates the one or more input singal when the comparing unit determines that the one or more fingerprints read by the touch panel 1 are identical to any of the fingerprints stored in the memory 22.

According to the above configuration, since the signal generating unit generates the one or more input signal in the case where the comparing unit determines that the one or more fingerprints read by the touch panel 1 are identical to any of fingerprints stored in the memory 22, the one or more processes can be entered in the gaming machine 10 at about the same time, at a time when one or more players play a game. Thereby, the input device allows the one or more players to enter multiple orders at about the same time.

In the input device of the present exemplary embodiment, the touch panel 1 covers a whole of a display screen 2a of a display device 2 which displays gaming contents thereon. According to the above configuration, since the touch panel 1 capable of reading one or more fingerprints covers the whole of the display screen 2a, one or more players can enters various operations into the gamingmachine 10 from anywhere in the display screen 2a.

In the input device of the present exemplary embodiment, the touch panel 1 reads one or more fingerprints of one or more fingers which press the icons 4 and/or 5 displayed on the display screen 2a of the display device 2. According to the above configuration, since the one or more input signal are generated in response to the one or more fingerprints of the one or more fingers which press the icons 4 and/or 5, one or more players can enter the operations A to freely move the icons 4 and/or 5 with their fingers, and accordingly the one or more players can play the game while having a new sense different from one of moving the icon 4 or 5 by using a conventional controller.

### (Modification of the exemplary emobdiment)

Although the present invention is described according to the preferred exemplary embodiment of the present invention, it may be embodied in other specific forms withouth departing from essential characteristics thereof. The number of players may be one player or three or more players. The number of operations may be three or more operations.

In the above exemplary embodiment , in the operation table, the fingerprints on the player A side define the fingerprints of the player A and the fingerprints on the player B side define the fingerprints of the player B. However, according to gaming contents, the fingerprints on the player A side may define the fingerprints of the player B and the fingerprints on the player B side may define the fingerprints of the player A. Thereby, the input device can be applied to a game which allows the player B or A to carry out the operation defined in the player A or B side.

## Claims

1. An input device employed in a gaming operation and configured to generate one or more input signals for causing a gaming machine (10) to execute one or more processes associated with one or more fingerprints which are read by the input device in a case where the read one or more fingerprints are identical to any of fingerprints previously stored in the input device (22), comprising:
a fingerprint reading means (1) for reading the one or more fingerprints;
a memory means (22) for storing therein a plurality of fingerprints which are previously read by the fingerprint reading means (1), wherein the stored fingerprints are related to the one or more processes;
a comparing means (21) for comparing the one or more fingerprints read by the fingerprint reading means (1) with any of the fingerprints stored in the memory means (22); and
a signal generating means (21) for generating the one or more input signal when the comparing means (21) determines that the one or more fingerprints read by the fingerprint reading means (1) are identical to any of the fingerprints stored in the memory means (22).

2. The input device according to claim 1, wherein the fingerprint reading means (1) covers a whole of a display screen (2a) of a display device (2) which displays gaming contents thereon.

3. The input device according to claim 2, wherein the fingerprint reading means (1) reads the one or more fingerprints of one or more fingers which press one or more icons (4, 5) displayed on the display screen (2a).
